(19) Europäisches Patentamt
European Patent Office
Office européen des brevets

(11) **EP 3 726 429 B1**

## (12) EUROPEAN PATENT SPECIFICATION

(45) Date of publication and mention
of the grant of the patent:
**29.07.2026 Bulletin 2026/31**

(21) Application number: **18889848.0**

(22) Date of filing: **14.12.2018**

(51) International Patent Classification (IPC):
**G06V 20/56** *(2022.01)* **G06F 17/16** *(2006.01)*

(52) Cooperative Patent Classification (CPC):
**G06F 17/16; G06F 18/251**

(86) International application number:
**PCT/CN2018/121008**

(87) International publication number:
**WO 2019/114807 (20.06.2019 Gazette 2019/25)**

### (54) MULTI-SENSOR TARGET INFORMATION FUSION

FUSION VON MULTISENSORZIELINFORMATIONEN

FUSION D'INFORMATIONS CIBLES DE CAPTEURS MULTIPLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2017 CN 201711346193**

(43) Date of publication of application:
**21.10.2020 Bulletin 2020/43**

(73) Proprietor: **NIO (Anhui) Holding Co., Ltd.
Hefei City, Anhui Province (CN)**

(72) Inventor: **PENG, Siwei
Anting, Jiading, Shanghai (CN)**

(74) Representative: **Vossius & Partner
Patentanwälte Rechtsanwälte mbB
Siebertstrasse 3
81675 München (DE)**

(56) References cited:
**CN-A- 105 352 535      CN-A- 106 291 533
CN-A- 108 573 270      CN-A- 108 573 271
US-A1- 2016 103 214**

## Description

## Technical Field

The invention belongs to the field of automobiles, relates to multi-sensor target information fusion, and more particularly to an optimization method for multi-sensor target information fusion and synchronization of multi-sensor target information fusion and multi-sensor sensing.

## Background Art

Currently, in the field of automobiles around the world, "intelligentization" is a clear development direction. The National Highway Traffic Safety Administration (NHTSA) has also given a standard for levels of automobile driving, from auxiliary driving to automated driving, but whether it is the auxiliary driving or the automated driving, it is necessary to fuse results from target sensing sensors, so as to reduce overlapped targets and compensate for deficiencies of the results from different sensors.

However, when it comes to the fusion of sensor results related to a target, this will involve the issue of weight assignment among the results from multiple sensors used for sensing the target. Such fusion requires processing of a large number of sensor results in real time and filtering of these results to provide a decision module with a stably and linearly varying target group, and thus usually involves the consumption of a large amount of processing power, and a conventional embedded processor chip has a relatively low processing performance, which result in the assignment of a fusion weight being artificially determined only according to characteristics of the sensors and the maximum error of the results when such a fusion process is carried out by means of the conventional embedded processor chip. The fusion weight obtained in this way is a weight defined in advance, and therefore, especially in the case of a sensor jump, there are problems that the weight assignment is irrational and is not universally applicable, and then an accurate target fusion estimation result cannot be obtained.

Moreover, in actual processing, due to the differences in algorithms of various sensor suppliers, the strength of hardware performance of sensors, etc., the update speeds of the sensors concerning a target will be affected to varying degrees, and different update speeds of different sensors will also affect the processing of target information fusion.

In this regard, a general processing method in the industry is as follows: when a target information fusion task is triggered, the previous sensing result from a sensor is usually taken as the latest input for target information fusion. However, when a recognition result from a sensor concerning a target is updated slowly or not updated, the problem that optimal estimation of a fusion result is not accurate enough is caused.

CN 105 352 535 A relates to a measurement method based on multi-sensor data fusion.

## Summary of the Invention

In order to overcome one or more of the above-mentioned shortcomings or other shortcomings, the invention is implemented by using the technical solutions as follows.

According to a first aspect of the invention, an optimization method for multi-sensor target information fusion is provided, which comprises: step S1: obtaining, for each time, a fusion prediction result for all sensors concerning a target state at the current time; step S2: obtaining actual measurement results from each sensor concerning the target state at the current time; step S3: obtaining, for each set of actual measurement results, an optimal estimation result for a corresponding sensor concerning the target state at the current time based on the fusion prediction result and the set of actual measurement results; and step S4: fusing optimal estimation results for all the sensors to determine a corresponding weight of each of the optimal estimation results and thus to obtain an optimal fusion estimation result concerning the target state at the current time.

Further, in the first aspect of the invention, step S3 comprises: step S31: calculating, for each set of actual measurement results, a corresponding transformation matrix based on the fusion prediction result and the set of actual measurement results; step S32: calculating a corresponding covariance of each set of actual measurement results; step S33: calculating, for each set of actual measurement results, a corresponding Kalman gain based on the corresponding transformation matrix and the corresponding covariance; and step S34: calculating, for each set of actual measurement results, the corresponding optimal estimation result for the corresponding sensor concerning the target state at the current time based on the fusion prediction result, the corresponding Kalman gain, the set of actual measurement results, and the corresponding transformation matrix.

Further, in the first aspect of the invention, step S4 comprises: step S41: determining the corresponding weight of each of the optimal estimation results according to the corresponding covariance of each set of actual measurement results; and step S42: calculating the optimal fusion estimation result for all the sensors concerning the target state at the current time based on each of the optimal estimation results and the corresponding weight.

Further, in the first aspect of the invention, the method also comprises: step S5: correcting the covariance obtained in step S32 according to the transformation matrix obtained in step S31 and the Kalman gain obtained in step S33, so as to obtain a corrected covariance.

Further, in the first aspect of the invention, in step S32, the corresponding covariance of each set of actual measurement results at the current time is obtained with a corrected covariance obtained at a previous time.

Further, in the first aspect of the invention, in step S1, the fusion prediction result at the current time is obtained with an optimal fusion estimation result concerning the target state at the previous time.

According to an aspect of the invention, a method for synchronizing multi-sensor target information fusion with multi-sensor sensing is provided, which comprises: step P1: obtaining actual measurement results from each sensor concerning a target state and recording a time at which each set of actual measurement results is obtained, so as to record a first time stamp for each set of actual measurement results; step P2: recording, as a second time stamp, a time at which target information fusion processing starts to be performed; step P3: calculating a time difference between each first time represented by each first time stamp and a second time represented by the second time stamp respectively; step P4: updating corresponding actual measurement results obtained at the first time based on each calculated time difference to obtain corresponding estimated measurement results at the second time; step P5: obtaining a fusion prediction result for all sensors concerning the target state at the second time; and step P6: obtaining, for each set of estimated measurement results, an optimal estimation result for a corresponding sensor concerning the target state at the second time based on the fusion prediction result and the set of estimated measurement results.

Further, in the second aspect of the invention, step P6 comprises: step P61: calculating, for each set of estimated measurement results, a corresponding transformation matrix based on the fusion prediction result and the set of estimated measurement results; step P62: calculating a corresponding covariance of each set of estimated measurement results; step P63: calculating, for each set of estimated measurement results, a corresponding Kalman gain based on the corresponding transformation matrix and the corresponding covariance; and step P64: calculating, for each set of estimated measurement results, the corresponding optimal estimation result for the corresponding sensor concerning the target state at the second time based on the fusion prediction result, the corresponding Kalman gain, the set of estimated measurement results, and the corresponding transformation matrix.

Further, in the second aspect of the invention, the method also comprises: step P7: fusing optimal estimation results for all the sensors to determine a corresponding weight of each of the optimal estimation results and thus to obtain an optimal fusion estimation result concerning the target state at the second time.

Further, in the second aspect of the invention, the method also comprises: step P8: correcting the covariance obtained in step P62 according to the transformation matrix obtained in step P61 and the Kalman gain obtained in step P63, so as to obtain a corrected covariance.

Further, in the second aspect of the invention, in step P62, the corresponding covariance of each set of estimated measurement results at the second time is obtained with a corrected covariance at the first time.

Further, in the second aspect of the invention, in step P1, the fusion prediction result at the second time is obtained with an optimal fusion estimation result concerning the target state at the first time.

According to a third aspect of the invention, a computer device is provided, which comprises a memory, a processor, and a computer program stored on the memory and operable on the processor, wherein the program implements, when executed by the processor, the steps of the method according to the first aspect and/or the second aspect of the invention.

According to a fourth aspect of the invention, a recording medium having a computer program stored thereon is provided, wherein the program is executed by a computer to implement the steps of the method according to the first aspect and/or the second aspect of the invention.

According to a fifth aspect of the invention, an auxiliary driving method is provided, which comprises an optimization method for multi-sensor target information fusion according to the first aspect of the invention.

According to a sixth aspect of the invention, an auxiliary driving method is provided, which comprises an optimization method for multi-sensor target information fusion according to the second aspect of the invention.

According to a seventh aspect of the invention, an auxiliary driving system is provided, which comprises an optimization apparatus for multi-sensor target information fusion according to the invention.

The foregoing features and operations of the invention will become more obvious according to the following descriptions and the accompanying drawings.

## Brief Description of the Drawings

The above-mentioned and other objectives and advantages of the invention will be more thorough and clearer from the following detailed description in conjunction with the accompanying drawings, wherein the same or similar elements are represented by the same numerals.

Fig. 1 is an example flowchart of an optimization method for multi-sensor target information fusion according to one implementation of the invention.

Fig. 2 is an example sub-flowchart of step S3 in Fig. 1 according to one embodiment of the invention.

Fig. 3 is an example sub-flowchart of step S4 in Fig. 1 according to one embodiment of the invention.

Fig. 4 is an example block diagram of an optimization apparatus for multi-sensor target information fusion according to one implementation of the invention.

Fig. 5 is an example block diagram of a computer device according to one implementation of the invention that is configured to perform an optimization method for multi-sensor target information fusion according to one implementation of the invention.

Fig. 6 is an example flowchart of a method for synchronizing multi-sensor target information fusion with multi-sensor sensing according to one implementation of the invention.

Fig. 7 is an example sub-flowchart of step P6 in Fig. 6 according to one embodiment of the invention.

Fig. 8 is an example block diagram of an apparatus for synchronizing multi-sensor target information fusion with multi-sensor sensing according to one implementation of the invention.

Fig. 9 is an example block diagram of a computer device according to one implementation of the invention that is configured to perform a method for synchronizing multi-sensor target information fusion with multi-sensor sensing according to one implementation of the invention.

## Detailed Description of Embodiments

Methods, apparatuses, computer devices, and a recording medium according to the invention will be further described in detail below in conjunction with the accompanying drawings. It should be noted that the following detailed description of embodiments is exemplary rather than limiting, and is intended to provide a basic understanding of the invention, but not to confirm key or decisive elements of the invention or limit the scope of protection.

The invention is described below with reference to block diagram illustrations, block diagrams and/or flowcharts of the methods and apparatuses in the embodiments of the invention. It should be understood that each block of the flowchart illustrations and/or the block diagrams and combinations of the flowchart illustrations and/or the block diagrams may be implemented by computer program instructions. These computer program instructions may be provided to a processor of a general-purpose computer, a special-purpose computer, or other programmable data processing devices to form a machine, such that the instructions, which are executed by the processor of the computer or the other programmable data processing devices, create components for implementing functions/operations specified in the flowcharts and/or blocks and/or one or more flow block diagrams.

These computer program instructions may be stored in a computer-readable memory and may instruct a computer or other programmable processors to implement functions in a specific manner, so that these instructions stored in the computer-readable memory constitute an article of manufacture, which contains instruction components for implementing the functions/operations specified in one or more blocks of the flowcharts and/or block diagrams.

These computer program instructions may be loaded onto a computer or other programmable data processors to enable a series of operational steps to be executed on the computer or the other programmable processors, so as to constitute a computer-implemented process, so that these instructions executed on the computer or the other programmable data processors provide steps for implementing the functions or operations specified in one or more blocks of the flowcharts and/or block diagrams. It should also be noted that in some alternative implementations, the functions/operations shown in the blocks may occur in an order different from that shown in the flowcharts. For example, two blocks shown in sequence may actually be executed substantially simultaneously or may sometimes be executed in a reverse order, which depends on the functions/operations involved.

The optimization method and apparatus for multi-sensor target information fusion according to the invention can be applied, for example, in a scenario where targets around a vehicle are sensed. In such a scenario, for example, a motion state of any one of targets around the vehicle can be characterized by a relative longitudinal position to the vehicle, a longitudinal speed, a longitudinal acceleration, a relative transverse position to the vehicle, a transverse speed, and a transverse acceleration, and each set of measurement results sensed by each of multiple sensors on the vehicle is related to the six items above or can be calculated to obtain values of the six items. Where there are differences in terms of the characteristic of each sensor and the measurement error for each item, the optimization method and apparatus for multi-sensor target information fusion according to the invention that are described in detail below can be used to obtain an optimal fusion result for any target and rationally determine a fusion weight.

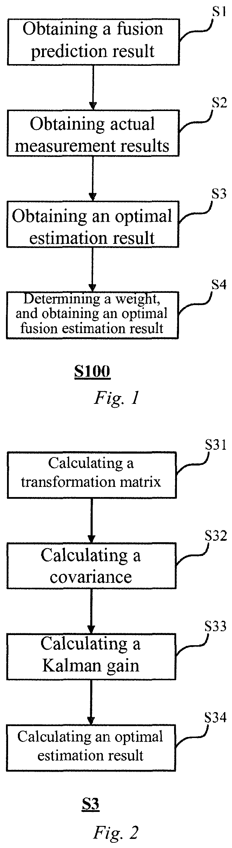

Fig. 1 is an example flowchart of an optimization method for multi-sensor target information fusion according to one implementation of the invention. As shown in Fig. 1, method S100 comprises the step of: obtaining, for each time, a fusion prediction result for all sensors concerning a target state at the current time (step S1).

In one example, for a time t, the following equation (1) can be used to determine a fusion prediction result concerning the target state of a target:

$$\dot{X}(t) = FX(t-1) + W(t) \quad \dots \quad (1)$$

where $\dot{X}(t)$ is a fusion prediction result for all sensors concerning the target state at the time t, $F$ is a system state transition matrix, $X(t-1)$ is an optimal fusion estimation result concerning the target state at a time t-1 (described later), and $W(t)$ is a system noise.

In one embodiment, as shown in Fig. 1, method S100 may further comprise the step of: obtaining actual measurement results from each sensor concerning the target state at the current time (step S2).

In one embodiment, as shown in Fig. 1, method S100 may further comprise the step of: obtaining, for each set of actual measurement results, an optimal estimation result for a corresponding sensor concerning the target state at the current time based on the fusion prediction result and the set of actual measurement results (step S3).

The details of step S3 will be described in detail in conjunction with Fig. 2.

Specifically, in one embodiment, as shown in Fig. 2, step S3 comprises the step of: calculating, for each set of actual measurement results, a corresponding transformation matrix based on the fusion prediction result and the set of actual measurement results (step S31).

In one example, for each set of actual measurement results obtained by each sensor, the following equation (2) can be used to determine the corresponding transformation matrix:

$$Z_{ik}(t) = H_{ik}\dot{X}(t) + V(t) \quad \dots \quad (2)$$

where $Z_{ik}(t)$ is a $k^{th}$ set of actual measurement results from an $i^{th}$ sensor concerning the target state at the time t, $H_{ik}$ is a corresponding transformation matrix of the $k^{th}$ set of actual measurement results from the $i^{th}$ sensor, $\dot{X}(t)$ is the fusion prediction result for all the sensors concerning the target state at the time t, and $V(t)$ is a measurement noise.

In one embodiment, as shown in Fig. 2, step S3 may further comprise the step of: calculating a corresponding covariance of each set of actual measurement results (step S32).

In one example, for each set of actual measurement results obtained by each sensor, the following equation (3) can be used to determine the corresponding covariance:

$$\dot{P}_{ik}(t) = F \cdot P_{ik}(t-1) \cdot F^T + Q \quad \dots \quad (3)$$

where $\dot{P}_{ik}(t)$ is a corresponding covariance of the $k^{th}$ set of actual measurement results from the $i^{th}$ sensor concerning the target state at the time t, $F$ is the system state transition matrix, $F^T$ is a transposed matrix of the system state transition matrix, $P_{ik}(t-1)$ is a corresponding covariance of an optimal estimation result of the $k^{th}$ set of actual measurement results from the $i^{th}$ sensor at the time t-1 (described later), and Q is the covariance of a system process noise.

In one embodiment, as shown in Fig. 2, step S3 may further comprise the step of: calculating, for each set of actual measurement results, a corresponding Kalman gain based on the corresponding transformation matrix and the corresponding covariance (step S33).

In one example, for each set of actual measurement results obtained by each sensor, the following equation (4) can be used to calculate the corresponding Kalman gain:

$$kg_{ik}(t) = \dot{P}_{ik}(t) \cdot H_{ik}^T / (H_{ik}\dot{P}_{ik}(t)H_{ik}^T + R) \quad \dots \quad (4)$$

where $kg_{ik}(t)$ is a corresponding Kalman gain of the $k^{th}$ set of actual measurement results from the $i^{th}$ sensor concerning the target state at the time t, $\dot{P}_{ik}(t)$ is the corresponding covariance of the $k^{th}$ set of actual measurement results from the $i^{th}$ sensor concerning the target state at the time t, $H_{ik}$ is the corresponding transformation matrix of the $k^{th}$ set of actual measurement results from the $i^{th}$ sensor, $H_{ik}^T$ is a transposed matrix of the corresponding transformation matrix of the $k^{th}$ set of actual measurement results from the $i^{th}$ sensor, and R is the covariance of a measurement process noise.

In one embodiment, as shown in Fig. 2, step S3 may further comprise the step of: calculating, for each set of actual measurement results, the corresponding optimal estimation result for the corresponding sensor concerning the target state at the current time based on the fusion prediction result, the corresponding Kalman gain, the set of actual measurement results, and the corresponding transformation matrix (step S34).

In one example, for each set of actual measurement results obtained by each sensor, the following equation (5) can be used to calculate the corresponding optimal estimation result:

$$X_{ik}(t) = \dot{X}(t) + kg_{ik}(t)(Z_{ik}(t) - H_{ik}\dot{X}(t)) \quad \cdots \quad (5)$$

where $X_{ik}(t)$ is a corresponding optimal estimation result of the $k^{th}$ set of actual measurement results from the $i^{th}$ sensor at the time t, $X(t)$ is the fusion prediction result for all the sensors concerning the target state at the time t, $kg_{ik}(t)$ is the corresponding Kalman gain of the $k^{th}$ set of actual measurement results from the $i^{th}$ sensor concerning the target state at the time t, $Z_{ik}(t)$ is the $k^{th}$ set of actual measurement results from the $i^{th}$ sensor concerning the target state at the time t, and $H_{ik}$ is the corresponding transformation matrix of the $k^{th}$ set of actual measurement results from the $i^{th}$ sensor.

After the optimal estimation result for the corresponding sensor concerning the target state at the current time is calculated for each set of actual measurement results, the process returns to Fig. 1. In one embodiment, as shown in Fig. 1, method S100 may further comprise the step of: fusing optimal estimation results for all the sensors to determine a corresponding weight of each of the optimal estimation results and thus to obtain an optimal fusion estimation result concerning the target state at the current time (step S4).

In one example, the following equation (6) can be used to obtain the optimal fusion estimation result concerning the target state at the current time:

$$X(t) = f(X_{11}(t), X_{12}(t), \ldots, X_{ik}(t), \dot{P}_{11}(t), \dot{P}_{12}(t), \ldots, \dot{P}_{ik}(t)) \quad \cdots \quad (6)$$

where $X(t)$ is an optimal fusion estimation result for all the sensors concerning the target state at the time t, $f$ is a fusion function, $Xi_k(t)$ is the corresponding optimal estimation result of the $k^{th}$ set of actual measurement results from the $i^{th}$ sensor at the time t, and $\dot{P}_{ik}(t)$ is the corresponding covariance of the $k^{th}$ set of actual measurement results from the $i^{th}$ sensor concerning the target state at the time t.

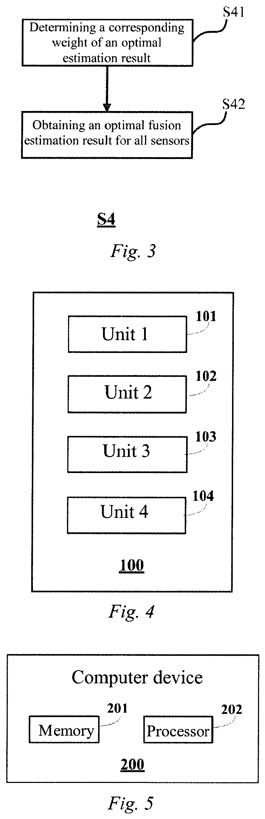

The details of step S4 will be described in detail in conjunction with Fig. 3.

Specifically, in one embodiment, as shown in Fig. 3, step S4 comprises the step of: determining the corresponding weight of each of the optimal estimation results according to the corresponding covariance of each set of actual measurement results (step S41).

In one example, after the equation (3) is used to calculate corresponding covariances (i.e., $\dot{P}_{11}(t), \dot{P}_{12}(t), \ldots, \dot{P}_{tk}(t)$ of all sets of actual measurement results from all the sensors, a weight (i.e., $w_{11}(t), w_{12}(t), \ldots, w_{ik}(t)$ is assigned to each corresponding optimal estimation result (i.e., $X_{11}(t), X_{12}(t), \ldots, X_{ik}(t)$ of each set of actual measurement results according to the magnitude of the covariances.

In one embodiment, as shown in Fig. 3, step S4 may further comprise the step of: calculating the optimal fusion estimation result for all the sensors concerning the target state at the current time based on each of the optimal estimation results and the corresponding weight (step S42).

In one example, the assigned weights (i.e., $w_{11}(t), w_{12}(t), \ldots, w_{ik}(t)$ are used to perform a weighted operation on the corresponding optimal estimation results (i.e., $X_{11}(t), X_{12}(t), \ldots, X_{ik}(t)$ so as to obtain the optimal fusion estimation result for all the sensors concerning the target state at the time t. In addition, as shown in the equation (1), $X(t)$ at the time t can also be used to calculate $\dot{X}(t + 1)$ at a time t+1.

Optionally, in one embodiment, method S100 may further comprise the step of: correcting the covariance obtained in step S32 according to the transformation matrix obtained in step S31 and the Kalman gain obtained in step S33, so as to obtain a corrected covariance (step S5, not shown), wherein the corrected covariance can be used to calculate a corresponding covariance of corresponding actual measurement results at the next time of the current time (see equation (3) above).

In one example, the following equation (7) is used to obtain the corrected covariance at the current time:

$$P_{ik}(t) = (I - kg_{ik}(t)H_{ik})\dot{P}_{ik}(t) \quad \cdots \quad (7)$$

where $P_{ik}(t)$ is a corrected covariance of the $k^{th}$ set of actual measurement results from the $i^{th}$ sensor at the time t, $I$ is an identity matrix, $kg_{ik}(t)$ is the corresponding Kalman gain of the $k^{th}$ set of actual measurement results from the $i^{th}$ sensor concerning the target state at the time t that is obtained in step S33, $H_{ik}$ is the corresponding transformation matrix of the $k^{th}$ set of actual measurement results from the $i^{th}$ sensor that is obtained in step S31, and $\dot{P}_{ik}(t)$ is the corresponding covariance of the $k^{th}$ set of actual measurement results from the $i^{th}$ sensor concerning the target state at the time t that is obtained in step S32, and in addition, $P_{ik}(t)$ at the time t can also be used to calculate $\dot{P}_{ik}(t+1)$ at the time t+1.

Weights can be adjusted in real time by means of the steps above, so as to obtain accurate target fusion estimation result.

In addition, it should be noted that although the sequence between steps is shown in Figs. 1, 2 and 3, those skilled in the art should understand that Figs. 1, 2 and 3 are merely examples, and the sequential relationship between the steps is not limited to the case shown in Figs. 1, 2 and 3. For example, step S1 in Fig. 1 may be performed after step S2, or the two steps may be performed simultaneously. For another example, step S31 in Fig. 2 may be performed after step S32, or the two steps may be performed simultaneously, etc.

Next, an optimization apparatus for multi-sensor target information fusion for performing the method shown in Fig. 1 is described with reference to Fig. 4.

As shown in Fig. 4, the apparatus 100 comprises unit 1 101, which is configured to obtain, for each time, a fusion prediction result for all sensors concerning a target state at the current time.

In one example, for a time t, the following equation (8) can be used to determine a fusion prediction result concerning the target state of a target:

$$\dot{X}(t) = FX(t-1) + W(t) \quad \ldots \quad (8)$$

where $\dot{X}(t)$ is a fusion prediction result for all sensors concerning the target state at the time t, $F$ is a system state transition matrix, $\dot{X}(t-1)$ is an optimal fusion estimation result concerning the target state at a time t-1 (described later), and $W(t)$ is a system noise.

In one embodiment, as shown in Fig. 4, the apparatus 100 may further comprise unit 2 102, which is configured to obtain actual measurement results from each sensor concerning the target state at the current time.

In one embodiment, as shown in Fig. 4, the apparatus 100 may further comprise unit 3, which is configured to obtain, for each set of actual measurement results, an optimal estimation result for a corresponding sensor concerning the target state at the current time based on the fusion prediction result and the set of actual measurement results.

The internal structure of unit 3 103 will be described below in detail.

Specifically, in one embodiment, unit 3 103 comprises unit 3A (not shown), which is configured to calculate, for each set of actual measurement results, a corresponding transformation matrix based on the fusion prediction result and the set of actual measurement results.

In one example, for each set of actual measurement results obtained by each sensor, the following equation (9) can be used to determine the corresponding transformation matrix:

$$Z_{ik}(t) = H_{ik}\dot{X}(t) + V(t) \quad \ldots \quad (9)$$

where $Z_{ik}(t)$ is a $k^{th}$ set of actual measurement results from an $i^{th}$ sensor concerning the target state at the time t, $H_{ik}$ is a corresponding transformation matrix of the $k^{th}$ set of actual measurement results from the $i^{th}$ sensor, $\dot{X}(t)$ is the fusion prediction result for all the sensors concerning the target state at the time t, and $V(t)$ is a measurement noise.

In one embodiment, unit 3 103 may further comprise unit 3B (not shown), which is configured to calculate a corresponding covariance of each set of actual measurement results.

In one example, for each set of actual measurement results obtained by each sensor, the following equation (10) can be used to determine the corresponding covariance:

$$\dot{P}_{ik}(t) = F \cdot P_{ik}(t-1) \cdot F^T + Q \quad \ldots \quad (10)$$

where $\dot{P}_{ik}(t)$ is a corresponding covariance of the $k^{th}$ set of actual measurement results from the $i^{th}$ sensor concerning the target state at the time t, $F$ is the system state transition matrix, $F^T$ is a transposed matrix of the system state transition matrix, $P_{ik}(t-1)$ is a corresponding covariance of an optimal estimation result of the $k^{th}$ set of actual measurement results from the $i^{th}$ sensor at the time t-1 (described later), and Q is the covariance of a system process noise.

In one embodiment, unit 3 103 may further comprise unit 3C (not shown), which is configured to calculate, for each set of actual measurement results, a corresponding Kalman gain based on the corresponding transformation matrix and the corresponding covariance.

In one example, for each set of actual measurement results obtained by each sensor, the following equation (11) can be used to calculate the corresponding Kalman gain:

$$kg_{ik}(t) = \dot{P}_{ik}(t) \cdot H_{ik}^T / (H_{ik}\dot{P}_{ik}(t)H_{ik}^T + R) \quad \ldots \quad (11)$$

where $kg_{ik}(t)$ is a corresponding Kalman gain of the $k^{th}$ set of actual measurement results from the $i^{th}$ sensor concerning the target state at the time t, $\dot{P}_{ik}(t)$ is the corresponding covariance of the $k^{th}$ set of actual measurement results from the $i^{th}$ sensor concerning the target state at the time t, $H_{ik}$ is the corresponding transformation matrix of the $k^{th}$ set of actual measurement results from the ith sensor, $H_{ik}{}^T$ is a transposed matrix of the corresponding transformation matrix of the kth set of actual measurement results from the ith sensor, and R is the covariance of a measurement process noise.

In one embodiment, unit 3 103 may further comprise unit 3D (not shown), which is configured to calculate, for each set of actual measurement results, the corresponding optimal estimation result for the corresponding sensor concerning the target state at the current time based on the fusion prediction result, the corresponding Kalman gain, the set of actual measurement results, and the corresponding transformation matrix.

In one example, for each set of actual measurement results obtained by each sensor, the following equation (12) can be used to calculate the corresponding optimal estimation result:

$$X_{ik}(t) = \dot{X}(t) + kg_{ik}(t)(Z_{ik}(t) - H_{ik}\dot{X}(t)) \quad \ldots \quad (12)$$

where $X_{ik}(t)$ is a corresponding optimal estimation result of the kth set of actual measurement results from the ith sensor at the time t, $\dot{X}(t)$ is the fusion prediction result for all the sensors concerning the target state at the time t, $kg_{ik}(t)$ is the corresponding Kalman gain of the kth set of actual measurement results from the ith sensor concerning the target state at the time t, $Z_{ik}(t)$ is the kth set of actual measurement results from the ith sensor concerning the target state at the time t, and $H_{ik}$ is the corresponding transformation matrix of the kth set of actual measurement results from the ith sensor.

After the optimal estimation result for the corresponding sensor concerning the target state at the current time is calculated for each set of actual measurement results, the process returns to Fig. 4. In one embodiment, as shown in Fig. 4, the apparatus 100 may further comprise unit 4 104, which is configured to fuse optimal estimation results for all the sensors to determine a corresponding weight of each of the optimal estimation results and thus to obtain an optimal fusion estimation result concerning the target state at the current time.

In one example, the following equation (13) can be used to obtain the optimal fusion estimation result concerning the target state at the current time:

$$X(t) = f(X_{11}(t), X_{12}(t), \ldots, X_{ik}(t), \dot{P}_{11}(t), \dot{P}_{12}(t), \ldots, \dot{P}_{ik}(t)) \quad \ldots \quad (13)$$

where $X(t)$ is an optimal fusion estimation result for all the sensors concerning the target state at the time t, $f$ is a fusion function, $X_{ik}(t)$ is the corresponding optimal estimation result of the kth set of actual measurement results from the ith sensor at the time t, and $\dot{P}_{ik}(t)$ is the corresponding covariance of the kth set of actual measurement results from the ith sensor concerning the target state at the time t.

The internal structure of unit 4 104 will be described below in detail.

Specifically, in one embodiment, unit 4 104 comprises unit 4A (not shown), which is configured to determine the corresponding weight of each of the optimal estimation results according to the corresponding covariance of each set of actual measurement results.

In one example, after the equation (10) is used to calculate corresponding covariances (i.e., $\dot{P}_{11}(t), \dot{P}_{12}(t), \ldots, \dot{P}_{ik}(t)$ of all sets of actual measurement results from all the sensors, a weight (i.e., $w_{11}(t), w_{12}(t), \ldots, w_{ik}(t)$ is assigned to each corresponding optimal estimation result (i.e., $X_{11}(t), X_{12}(t), \ldots, X_{ik}(t)$ of each set of actual measurement results according to the magnitude of the covariances.

In one embodiment, unit 4 104 may further comprise unit 4B (not shown), which is configured to calculate the optimal fusion estimation result for all the sensors concerning the target state at the current time based on each of the optimal estimation results and the corresponding weight.

In one example, the assigned weights (i.e., $w_{11}(t), w_{12}(t), \ldots, w_{ik}(t)$ are used to perform a weighted operation on the corresponding optimal estimation results (i.e., $X_{11}(t), X_{12}(t), \ldots, X_{ik}(t)$ so as to obtain the optimal fusion estimation result for all the sensors concerning the target state at the time t. In addition, as shown in the equation (8), $X(t)$ at the time t can also be used to calculate $\dot{X}(t + 1)$ at a time t+1.

Optionally, in one embodiment, the apparatus 100 may further comprise unit 5 (not shown), which is configured to correct the covariance obtained in unit 3B according to the transformation matrix obtained in unit 3A and the Kalman gain obtained in unit 3C, so as to obtain a corrected covariance, wherein the corrected covariance can be used to calculate a corresponding covariance of corresponding actual measurement results at the next time of the current time (see equation (10) above).

In one example, the following equation (14) is used to obtain the corrected covariance at the current time:

$$P_{ik}(t) = (I - kg_{ik}(t)H_{ik})\dot{P}_{ik}(t) \quad \ldots \quad (14)$$

where $P_{ik}(t)$ is a corrected covariance of the kth set of actual measurement results from the ith sensor at the time t, $I$ is an

identity matrix, $kg_{ik}(t)$ is the corresponding Kalman gain of the $k^{th}$ set of actual measurement results from the $i^{th}$ sensor concerning the target state at the time t that is obtained in step S33, $H_{ik}$ is the corresponding transformation matrix of the $k^{th}$ set of actual measurement results from the $i^{th}$ sensor that is obtained in step S31, and $\dot{P}_{ik}(t)$ is the corresponding covariance of the $k^{th}$ set of actual measurement results from the $i^{th}$ sensor concerning the target state at the time t that is obtained in step S32, and in addition, $P_{ik}(t)$ at the time t can also be used to calculate $\dot{P}_{ik}(t+1)$ at the time t+1.

Weights can be adjusted in real time by means of the units above, so as to obtain an accurate target fusion estimation result.

When applied to auxiliary driving, the optimization method and apparatus for multi-sensor target information fusion according to one implementation of the invention can enable an auxiliary driving system to employ more optimized data, thereby facilitating its decision-making and control, for example, making, based on the optimized data, a better decision for auxiliary driving functions or scenarios, such as adaptive cruise and emergency braking, with such functions or scenarios further including vehicle stability control and the like.

Although implementations of the optimization method and apparatus for multi-sensor target information fusion have been mainly described in the invention, the invention is not limited to these implementations, and the invention may be implemented in a way of: an auxiliary driving method comprising the method described above or an auxiliary driving system comprising the apparatus described above, or a computer device for performing the method described above or a computer program for performing the method described above, or a computer program for implementing functions of the apparatus described above or a computer-readable recording medium having the computer program recorded thereon.

Fig. 5 shows a computer device according to one implementation of the invention that is configured to perform an optimization method for multi-sensor target information fusion according to one implementation of the invention. As shown in Fig. 5, a computer device 200 comprises a memory 201 and a processor 202. Although not shown, the computer device 200 further comprises a computer program that is stored on the memory 201 and operable on the processor 202. The program implements, when executed by the processor, the steps, for example as shown in Figs. 1, 2 and 3, of an optimization method for multi-sensor target information fusion according to one implementation of the invention.

Compared with the prior art, the method S100 or the apparatus 100 according to one implementation of the invention can obtain one or more of the beneficial effects as follows:

(1) a fusion weight can be calculated in real time to ensure that the result of weight assignment is appropriate in most scenarios; and

(2) Kalman filtering is applied to each set of measurement results from each sensor to obtain a corresponding covariance and optimal estimation result for all the measurement results, and then an optimal fusion estimation result concerning a target state is calculated, so that each corresponding weight of the optimal estimation result can be determined in conjunction with the covariance of the measurement results from the sensor. Therefore, even if the sensor is affected by hardware performance and environment and a detection result does not conform to a physical motion principle, the weight can be adjusted in real time to realize the optimal fusion estimation of the target and to improve the performance of fusion estimation.

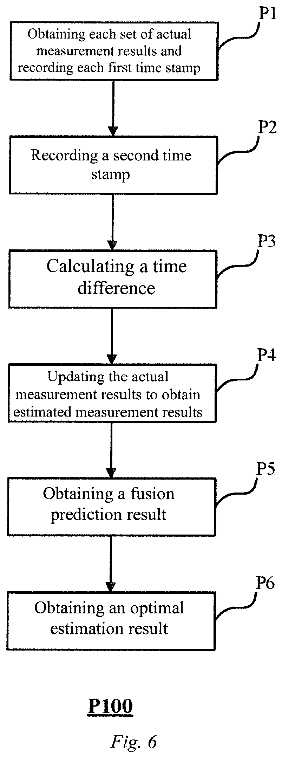

Fig. 6 is an example flowchart of a method for synchronizing multi-sensor target information fusion with multi-sensor sensing according to one implementation of the invention. As shown in Fig. 6, method P100 comprises the step of: obtaining actual measurement results from each sensor concerning a target state and recording a time at which each set of actual measurement results is obtained, so as to record a first time stamp for each set of actual measurement results (step P1).

In one example, after a set of actual measurement results is received, a corresponding receiving time stamp is recorded. For example, a receiving time stamp of a first set of actual measurement results from a first sensor is marked as $t_{111}$, a receiving time stamp of a second set of actual measurement results from the first sensor is marked as $t_{112}$, ..., and a receiving time stamp of a $k^{th}$ set of actual measurement results from an $i^{th}$ sensor is marked as $t_{1ik}$. These time stamps are collectively referred to as a first time stamp (i.e., a receiving time stamp) herein.

In one embodiment, as shown in Fig. 6, method P100 may further comprise the step of: recording, as a second time stamp, a time at which target information fusion processing starts to be performed (step P2).

In one example, a time at which fusion processing is performed on all sets of actual measurement results from all sensors is recorded as a second time stamp (i.e., a fusion time stamp).

In one embodiment, as shown in Fig. 6, method P100 may further comprise the step of: calculating a time difference between each first time represented by each first time stamp and a second time represented by the second time stamp respectively (step P3).

In one example, the following equation (15) can be used to calculate the time difference:

$$\Delta t_{ik} = t_2 - t_{1ik} \quad \cdots \quad (15)$$

where $\Delta t_{ik}$ is a corresponding time difference of the $k^{th}$ set of actual measurement results from the $i^{th}$ sensor, $t_{1ik}$ is a first time represented by a corresponding first time stamp of the $k^{th}$ set of actual measurement results from the $i^{th}$ sensor, and $t_2$ is the second time represented by the second time stamp.

In one embodiment, as shown in Fig. 6, method P100 may further comprise the step of: updating corresponding actual measurement results obtained at the first time based on each calculated time difference to obtain corresponding estimated measurement results at the second time (step P4).

In one example, assuming that the displacement of a vehicle changes within the time of $\Delta t_{ik}$, measurement results obtained at $t_{1ik}$:

$$\Delta X_{vcs\_ik} = \dot{X}_{vcs} \cdot \Delta t_{ik} \quad \cdots \quad (16)$$

$$\Delta Y_{vcs\_ik} = \dot{Y}_{vcs} \cdot \Delta t_{ik} \quad \cdots \quad (17)$$

$$\hat{Z}_{ik}(t_2 \mid t_{1ik}) = \cos\omega \cdot (Z_{ik\_x}(t_{1ik}) + \begin{bmatrix} \Delta X_{vcs\_ik} \\ 0 \\ 0 \end{bmatrix}) + \sin\omega \cdot (Z_{ik\_y}(t_{1ik}) + \begin{bmatrix} \Delta Y_{vcs\_ik} \\ 0 \\ 0 \end{bmatrix}) \quad \cdots \quad (18)$$

where $\dot{X}_{vcs}$ is a longitudinal speed of the vehicle, $Y_{vcs}$ is a transverse speed of the vehicle, $\Delta X_{vcs\_ik}$ is the displacement of the vehicle in the longitudinal direction within $\Delta t$ that corresponds to the $k^{th}$ set of actual measurement results from the $i^{th}$ sensor, $\Delta Y_{vcs\_ik}$ is the displacement of the vehicle in the transverse direction within $\Delta t$ that corresponds to the $k^{th}$ set of actual measurement results from the $i^{th}$ sensor, $Z_{ik}(t_2 \mid t_{1ik})$ is estimated measurement results at the second time $t_2$ that correspond to the $k^{th}$ set of actual measurement results from the $i^{th}$ sensor, $\omega$ is a deflection angle of the vehicle within $\Delta t$ that corresponds to the $k^{th}$ set of actual measurement results from the $i^{th}$ sensor, $Z_{ik\_x}(t_{1ik})$ is a longitudinal component of the $k^{th}$ set of actual measurement results from the $i^{th}$ sensor that are obtained at the first time, and $Z_{ik\_y}(t_{1ik})$ is a transverse component of the $k^{th}$ set of actual measurement results from the $i^{th}$ sensor that are obtained at the first time.

In one embodiment, as shown in Fig. 6, method P100 may further comprise the step of: obtaining a fusion prediction result for all sensors concerning the target state at the second time (step P5).

In one example, for the second time $t_2$, the following equation (19) can be used to determine a fusion prediction result concerning the target state of a target:

$$\dot{X}(t_2) = FX(t_1) + W(t_2) \quad \cdots \quad (19)$$

where $\dot{X}(t_2)$ is the fusion prediction result for all the sensors concerning the target state at the second time $t_2$, $F$ is a system state transition matrix, $X(t_1)$ is an optimal fusion estimation result concerning the target state at the first time $t_1$ (described later), and $W(t_2)$ is a system noise.

In one embodiment, as shown in Fig. 6, method P100 may further comprise the step of: obtaining, for each set of estimated measurement results, an optimal estimation result for a corresponding sensor concerning the target state at the second time based on the fusion prediction result and the set of estimated measurement results (step P6).

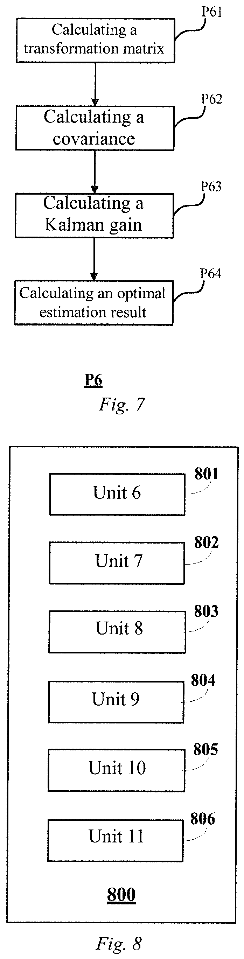

The details of step P6 will be described in detail in conjunction with Fig. 7.

Specifically, in one embodiment, as shown in Fig. 7, step P6 comprises the step of: calculating, for each set of estimated measurement results, a corresponding transformation matrix based on the fusion prediction result and the set of estimated measurement results (step P61).

In one example, for each set of estimated measurement results, the following equation (20) can be used to determine the corresponding transformation matrix:

$$\hat{Z}_{ik}(t_2 \mid t_{1ik}) = H_{ik}\dot{X}(t_2) + V(t_2) \cdot f(\Delta t_{ik}) \quad \cdots \quad (20)$$

where $Z_{ik}(t_1 \mid t_{1ik})$ is estimated measurement results at the second time $t_2$ that correspond to the $k^{th}$ set of actual measurement results from the $i^{th}$ sensor, $H_{ik}$ is a transformation matrix corresponding to the $k^{th}$ set of actual measurement results from the $i^{th}$ sensor, $\dot{X}(t_2)$ is the fusion prediction result for all the sensors concerning the target state at the second time $t_2$, $V(t_2)$ is a measurement noise, $f(\Delta t_{ik})$ is a function for calculating a weight of the measurement noise according to $\Delta t$,

and the larger $\Delta t_{ik}$ indicates the larger measurement noise.

In one embodiment, as shown in Fig. 7, step P6 may further comprise the step of: calculating a covariance corresponding to each set of estimated measurement results (step P62).

In one example, for each set of estimated measurement results, the following equation (21) can be used to determine the corresponding covariance:

$$\dot{P}_{ik}(t_2) = F \cdot P_{ik}(t_{1ik}) \cdot F^T + Q \quad \cdots \quad (21)$$

where $P_{ik}(t_2)$ is a corresponding covariance of the $k^{th}$ set of estimated measurement results from the $i^{th}$ sensor concerning the target state at the second time $t_2$, $F$ is the system state transition matrix, $F^T$ is a transposed matrix of the system state transition matrix, $P_{ik}(t_{1ik})$ is a corresponding covariance of an optimal estimation result of the $k^{th}$ set of estimated measurement results from the $i^{th}$ sensor at the first time $t_1$ (described later), and Q is the covariance of a system process noise.

In one embodiment, as shown in Fig. 7, step P6 may further comprise the step of: calculating, for each set of estimated measurement results, a corresponding Kalman gain based on the corresponding transformation matrix and the corresponding covariance (step P63).

In one example, for each set of estimated measurement results, the following equation (22) can be used to calculate the corresponding Kalman gain:

$$kg_{ik}(t_2) = \dot{P}_{ik}(t_2) \cdot H_{ik}^T / (H_{ik}\dot{P}_{ik}(t_2)H_{ik}^T + R) \quad \cdots \quad (22)$$

where $kg_{ik}(t_2)$ is a corresponding Kalman gain of the $k^{th}$ set of estimated measurement results from the $i^{th}$ sensor concerning the target state at the second time $t_2$, $\dot{P}_{ik}(t_2)$ is the corresponding covariance of the $k^{th}$ set of estimated measurement results from the $i^{th}$ sensor concerning the target state at the second time $t_2$, $H_{ik}$ is the corresponding transformation matrix of the $k^{th}$ set of actual measurement results from the $i^{th}$ sensor, $H_{ik}^T$ is a transposed matrix of the corresponding transformation matrix of the $k^{th}$ set of actual measurement results from the $i^{th}$ sensor, and R is the covariance of a measurement process noise.

In one embodiment, as shown in Fig. 7, step P6 may further comprise the step of: calculating, for each set of estimated measurement results, the corresponding optimal estimation result for the corresponding sensor concerning the target state at the second time based on the fusion prediction result, the corresponding Kalman gain, the set of estimated measurement results, and the corresponding transformation matrix (step P64).

In one example, for each set of estimated measurement results, the following equation (23) can be used to calculate the corresponding optimal estimation result:

$$X_{ik}(t_2) = \dot{X}(t_2) + kg_{ik}(t_2)(\hat{\dot{Z}}_{ik}(t_2 | t_{1ik}) - H_{ik}\dot{X}(t_2)) \quad \cdots \quad (23)$$

where $X_{ik}(t_2)$ is a corresponding optimal estimation result of the $k^{th}$ set of estimated measurement results from the $i^{th}$ sensor at the second time $t_2$, $\dot{X}(t_2)$ is the fusion prediction result for all the sensors concerning the target state at the second time $t_2$, $kg_{ik}(t_2)$ is the corresponding Kalman gain of the $k^{th}$ set of estimated measurement results from the $i^{th}$ sensor concerning the target state at the second time $t_2$, $\hat{\dot{Z}}_{ik}(t_2 | t_{1ik})$ is the estimated measurement results at the second time $t_2$ that correspond to the $k^{th}$ set of actual measurement results from the $i^{th}$ sensor, and $H_{ik}$ is the corresponding transformation matrix of the $k^{th}$ set of actual measurement results from the $i^{th}$ sensor.

Through the above steps, an accurate optimal estimation result concerning the target state can be obtained for each set of actual measurement results.

Optionally, in one embodiment, after the optimal estimation result corresponding to each set of actual measurement results from each sensor is calculated, method P100 may further comprise the step of: fusing optimal estimation results for all the sensors to determine a corresponding weight of each of the optimal estimation results and thus to obtain an optimal fusion estimation result concerning the target state at the second time (step P7, not shown).

In one example, the following equation (24) can be used to obtain the optimal fusion estimation result concerning the target state at the second time $t_2$:

$$X(t_2) = f(X_{11}(t_2), X_{12}(t_2), \ldots, X_{ik}(t_2), \dot{P}_{11}(t_2), \dot{P}_{12}(t_2), \ldots, \dot{P}_{ik}(t_2)) \quad \cdots \quad (24)$$

where is an optimal fusion estimation result for all the sensors concerning the target state at the second time $t_2$, $f$ is a fusion

function, $X_{ik}(t_2)$ is the corresponding optimal estimation result of the $k^{th}$ set of estimated measurement results from the $i^{th}$ sensor at the second time $t_2$, and $P_{ik}(t_2)$ is the corresponding covariance of the $k^{th}$ set of estimated measurement results from the $i^{th}$ sensor concerning the target state at the second time $t_2$. In addition, as shown in the equation (19), an optimal fusion estimation result $X(t_1)$ at the current time (for example, the first time $t_1$) can also be used to calculate a fusion prediction result $\dot{X}(t_2)$ at the next time (for example, the second time $t_2$).

Optionally, in one embodiment, method P100 may further comprise the step of: correcting the covariance obtained in step P62 according to the transformation matrix obtained in step P61 and the Kalman gain obtained in step P63, so as to obtain a corrected covariance (step P8, not shown), wherein the corrected covariance can be used to calculate a corresponding covariance of estimated measurement results at the next time (for example, a third time $t_3$) of the current time (for example, the second time $t_2$) (see equation (21) above).

In one example, the following equation (25) is used to obtain a corrected covariance at the current time (for example, the second time $t_2$):

$$P_{ik}(t_2) = (I - kg_{ik}(t_2)H_{ik})\dot{P}_{ik}(t_2) \quad \dots \quad (25)$$

where $P_{ik}(t_2)$ is a corrected covariance of the $k^{th}$ set of estimated measurement results from the $i^{th}$ sensor at the second time $t_2$, $I$ is an identity matrix, $kg_{ik}(t_2)$ is the corresponding Kalman gain of the $k^{th}$ set of estimated measurement results from the $i^{th}$ sensor concerning the target state at the second time $t_2$ that is obtained in step P63, $H_{ik}$ is the corresponding transformation matrix of the $k^{th}$ set of actual measurement results from the $i^{th}$ sensor that is obtained in step P61, and $P_{ik}(t_2)$ is the corresponding covariance of the $k^{th}$ set of estimated measurement results from the $i^{th}$ sensor concerning the target state at the second time $t_2$ that is obtained in step P62, and in addition, $P_{ik}(t_2)$ at the current time (for example, the second time $t_2$) can also be used to calculate $P_{ik}(t_3)$ at the next time (for example, the third time $t_3$).

In addition, it should be noted that although the sequence between steps is shown in Figs. 6 and 7, those skilled in the art should understand that Figs. 6 and 7 are merely examples, and the sequential relationship between the steps is not limited to the case shown in Figs. 6 and 7. For example, step P5 in Fig. 6 may be performed before step P4, or the two steps may be performed simultaneously. For another example, step P61 in Fig. 7 may be performed after step P62, or the two steps may be performed simultaneously, etc.

Next, an apparatus for synchronizing multi-sensor target information fusion with multi-sensor sensing is described with reference to Fig. 8.

As shown in Fig. 8, the apparatus 800 comprises unit 6 801, which is configured to obtain actual measurement results from each sensor concerning a target state and record a time at which each set of actual measurement results is obtained, so as to record a first time stamp for each set of actual measurement results.

In one example, after a set of actual measurement results is received, a corresponding receiving time stamp is recorded. For example, a receiving time stamp of a first set of actual measurement results from a first sensor is marked as $t_{111}$, a receiving time stamp of a second set of actual measurement results from the first sensor is marked as $t_{112}$, ..., and a receiving time stamp of a $k^{th}$ set of actual measurement results from an $i^{th}$ sensor is marked as $t_{1ik}$. These time stamps are collectively referred to as a first time stamp (i.e., a receiving time stamp) herein.

In one embodiment, as shown in Fig. 8, the apparatus 800 may further comprise unit 7 802, which is configured to record, as a second time stamp, a time at which target information fusion processing starts to be performed.

In one example, a time at which fusion processing is performed on all sets of actual measurement results from all sensors is recorded as a second time stamp (i.e., a fusion time stamp).

In one embodiment, as shown in Fig. 8, the apparatus 800 may further comprise unit 8 803, which is configured to calculate a time difference between each first time represented by each first time stamp and a second time represented by the second time stamp respectively.

In one example, the following equation (26) can be used to calculate the time difference:

$$\Delta t_{ik} = t_2 - t_{1ik} \quad \dots \quad (26)$$

where $\Delta t_{ik}$ is a corresponding time difference of the $k^{th}$ set of actual measurement results from the $i^{th}$ sensor, $t_{1ik}$ is a first time represented by a corresponding first time stamp of the $k^{th}$ set of actual measurement results from the $i^{th}$ sensor, and $t_2$ is the second time represented by the second time stamp.

In one embodiment, as shown in Fig. 8, the apparatus 800 may further comprise unit 9 804, which is configured to update corresponding actual measurement results obtained at the first time based on each calculated time difference to obtain corresponding estimated measurement results at the second time.

In one example, assuming that the displacement of a vehicle changes within the time of $\Delta t_{ik}$, measurement results obtained at $t_{1ik}$:

$$\Delta X_{vcs\_ik} = \dot{X}_{vcs} \cdot \Delta t_{ik} \quad \cdots \quad (27)$$

$$\Delta Y_{vcs\_ik} = \dot{Y}_{vcs} \cdot \Delta t_{ik} \quad \cdots \quad (28)$$

$$\hat{Z}_{ik}(t_2|t_{1ik}) = \cos\omega \cdot (Z_{ik\_x}(t_{1ik}) + \begin{bmatrix} \Delta Y_{vcs\_ik} \\ 0 \\ 0 \end{bmatrix}) + \sin\omega \cdot (Z_{ik\_y}(t_{1ik}) + \begin{bmatrix} \Delta Y_{vcs\_ik} \\ 0 \\ 0 \end{bmatrix}) \quad \cdots \quad (29)$$

where $\dot{X}_{vcs}$ is a longitudinal speed of the vehicle, $\dot{Y}_{vcs}$ is a transverse speed of the vehicle, $\Delta X_{vcs\_ik}$ is the displacement of the vehicle in the longitudinal direction within $\Delta t$ that corresponds to the $k^{th}$ set of actual measurement results from the $i^{th}$ sensor, $\Delta Y_{vcs\_ik}$ is the displacement of the vehicle in the transverse direction within $\Delta t$ that corresponds to the $k^{th}$ set of actual measurement results from the $i^{th}$ sensor, $\dot{Z}_{ik}(t_2|t_{1ik})$ is estimated measurement results at the second time $t_2$ that correspond to the $k^{th}$ set of actual measurement results from the $i^{th}$ sensor, $\omega$ is a deflection angle of the vehicle within $\Delta t$ that corresponds to the $k^{th}$ set of actual measurement results from the $i^{th}$ sensor, $Z_{ik\_x}(t_{1ik})$ is a longitudinal component of the $k^{th}$ set of actual measurement results from the $i^{th}$ sensor that are obtained at the first time, and $Z_{ik\_y}(t_{1ik})$ is a transverse component of the $k^{th}$ set of actual measurement results from the $i^{th}$ sensor that are obtained at the first time.

In one embodiment, as shown in Fig. 8, the apparatus 800 may further comprise unit 10 805, which is configured to obtain a fusion prediction result for all sensors concerning the target state at the second time.

In one example, for the second time $t_2$, the following equation (30) can be used to determine a fusion prediction result concerning the target state of a target:

$$\dot{X}(t_2) = FX(t_1) + W(t_2) \quad \cdots \quad (30)$$

where $\dot{X}(t_2)$ is the fusion prediction result for all the sensors concerning the target state at the second time $t_2$, $F$ is a system state transition matrix, $X(t_1)$ is an optimal fusion estimation result concerning the target state at the first time $t_1$ (described later), and $W(t_2)$ is a system noise.

In one embodiment, as shown in Fig. 8, the apparatus 800 may further comprise unit 11 806, which is configured to obtain, for each set of estimated measurement results, an optimal estimation result for a corresponding sensor concerning the target state at the second time based on the fusion prediction result and the set of estimated measurement results.

The details of unit 11 806 will be described below in detail.

Specifically, in one embodiment, unit 11 806 comprises unit 6A (not shown), which is configured to calculate, for each set of estimated measurement results, a corresponding transformation matrix based on the fusion prediction result and the set of estimated measurement results.

In one example, for each set of estimated measurement results, the following equation (31) can be used to determine the corresponding transformation matrix:

$$\hat{Z}_{ik}(t_2|t_{1ik}) = H_{ik}\dot{X}(t_2) + V(t_2) \cdot f(\Delta t_{ik}) \quad \cdots \quad (31)$$

where $Z_{ik}(t_2|t_{1ik})$ is estimated measurement results at the second time $t_2$ that correspond to the $k^{th}$ set of actual measurement results from the $i^{th}$ sensor, $H_{ik}$ is a transformation matrix corresponding to the $k^{th}$ set of actual measurement results from the $i^{th}$ sensor, $\dot{X}(t_2)$ is the fusion prediction result for all the sensors concerning the target state at the second time $t_2$, $V(t_2)$ is a measurement noise, $f(\Delta t_{ik})$ is a function for calculating a weight of the measurement noise according to $\Delta t$, and the larger $\Delta t_{ik}$ indicates the larger measurement noise.

In one embodiment, unit 11 806 may further comprise unit 6B (not shown), which is configured to calculate a covariance corresponding to each set of estimated measurement results.

In one example, for each set of estimated measurement results, the following equation (32) can be used to determine the corresponding covariance:

$$\dot{P}_{ik}(t_2) = F \cdot P_{ik}(t_{1ik}) \cdot F^T + Q \quad \cdots \quad (32)$$

where $P_{ik}(t_2)$ is a corresponding covariance of the kth set of estimated measurement results from the ith sensor concerning the target state at the second time $t_2$, F is the system state transition matrix, $F^T$ is a transposed matrix of the system state transition matrix, $P_{ik}(t_{1ik})$ is a corresponding covariance of an optimal estimation result of the kth set of estimated measurement results from the ith sensor at the first time $t_1$ (described later), and Q is the covariance of a system process noise.

In one embodiment, unit 11 806 may further comprise unit 6C (not shown), which is configured to calculate, for each set of estimated measurement results, a corresponding Kalman gain based on the corresponding transformation matrix and the corresponding covariance.

In one example, for each set of estimated measurement results, the following equation (33) can be used to calculate the corresponding Kalman gain:

$$ kg_{ik}(t_2) = \dot{P}_{ik}(t_2) \cdot H_{ik}{}^T /(H_{ik}\dot{P}_{ik}(t_2)H_{ik}{}^T + R) \quad \dots \quad (33) $$

where $kg_{ik}(t_2)$ is a corresponding Kalman gain of the kth set of estimated measurement results from the ith sensor concerning the target state at the second time $t_2$, $\dot{P}_{ik}(t_2)$ is the corresponding covariance of the kth set of estimated measurement results from the ith sensor concerning the target state at the second time $t_2$, $H_{ik}$ is the corresponding transformation matrix of the kth set of actual measurement results from the ith sensor, $H_{ik}{}^T$ is a transposed matrix of the corresponding transformation matrix of the kth set of actual measurement results from the ith sensor, and R is the covariance of a measurement process noise.

In one embodiment, unit 11 806 may further comprise unit 6D, which is configured to calculate, for each set of estimated measurement results, the corresponding optimal estimation result for the corresponding sensor concerning the target state at the second time based on the fusion prediction result, the corresponding Kalman gain, the set of estimated measurement results, and the corresponding transformation matrix.

In one example, for each set of estimated measurement results, the following equation (34) can be used to calculate the corresponding optimal estimation result:

$$ X_{ik}(t_2) = \dot{X}(t_2) + kg_{ik}(t_2)(\hat{Z}_{ik}(t_2 \mid t_{1ik}) - H_{ik}\dot{X}(t_2)) \quad \dots \quad (34) $$

where $X_{ik}(t_2)$ is a corresponding optimal estimation result of the kth set of estimated measurement results from the ith sensor at the second time $t_2$, $\dot{X}(t_2)$ is the fusion prediction result for all the sensors concerning the target state at the second time $t_2$, $kg_{ik}(t_2)$ is the corresponding Kalman gain of the kth set of estimated measurement results from the ith sensor concerning the target state at the second time $t_2$, $\hat{Z}_{tk}(t_2|t_{1ik})$ is the estimated measurement results at the second time $t_2$ that correspond to the kth set of actual measurement results from the ith sensor, and $H_{ik}$ is the corresponding transformation matrix of the kth set of actual measurement results from the ith sensor.

Through the above units, an accurate optimal estimation result concerning the target state can be obtained for each set of actual measurement results.

Optionally, in one embodiment, the apparatus 800 may further comprise unit 8 (not shown), which is configured to fuse optimal estimation results for all the sensors to determine a corresponding weight of each of the optimal estimation results and thus to obtain an optimal fusion estimation result concerning the target state at the second time.

In one example, the following equation (35) can be used to obtain the optimal fusion estimation result concerning the target state at the second time $t_2$:

$$ X(t_2) = f(X_{11}(t_2), X_{12}(t_2), \dots, X_{ik}(t_2), \dot{P}_{11}(t_2), \dot{P}_{12}(t_2), \dots, \dot{P}_{ik}(t_2)) \quad \dots \quad (35) $$

where $X(t_2)$ is an optimal fusion estimation result for all the sensors concerning the target state at the second time $t_2$, $f$ is a fusion function, $X_{ik}(t_2)$ is the corresponding optimal estimation result of the kth set of estimated measurement results from the ith sensor at the second time $t_2$, and $\dot{P}_{ik}(t_2)$ is the corresponding covariance of the kth set of estimated measurement results from the ith sensor concerning the target state at the second time $t_2$. In addition, as shown in the equation (30), an optimal fusion estimation result $X(t_1)$ at the current time (for example, the first time $t_1$) can also be used to calculate a fusion prediction result $\dot{X}(t_2)$ at the next time (for example, the second time $t_2$).

Optionally, in one embodiment, the apparatus 800 may further comprise unit 9 (not shown), which is configured to correct the covariance obtained in unit 6B according to the transformation matrix obtained in unit 6A and the Kalman gain obtained in unit 6C, so as to obtain a corrected covariance, wherein the corrected covariance can be used to calculate a corresponding covariance of estimated measurement results at the next time (for example, a third time $t_3$) of the current time (for example, the second time $t_2$) (see equation (32) above).

In one example, the following equation (36) is used to obtain a corrected covariance at the current time (for example, the second time $t_2$):

$$P_{ik}(t_2) = (I - kg_{ik}(t_2)H_{ik})\dot{P}_{ik}(t_2) \quad \cdots \quad (36)$$

where $P_{ik}(t_2)$ is a corrected covariance of the kth set of estimated measurement results from the ith sensor at the second time $t_2$, I is an identity matrix, $kg_{ik}(t_2)$ is the corresponding Kalman gain of the kth set of estimated measurement results from the ith sensor concerning the target state at the second time $t_2$ that is obtained in step P63, $H_{ik}$ is the corresponding transformation matrix of the kth set of actual measurement results from the ith sensor that is obtained in step P61, and $\dot{P}_{ik}(t_2)$ is the corresponding covariance of the kth set of estimated measurement results from the ith sensor concerning the target state at the second time $t_2$ that is obtained in step P62, and in addition, $P_{ik}(t_2)$ at the current time (for example, the second time $t_2$) can also be used to calculate $\dot{P}_{ik}(t_3)$ at the next time (for example, the third time $t_3$).

When applied to auxiliary driving, the method and apparatus for synchronizing multi-sensor target information fusion with multi-sensor sensing according to one implementation of the invention can enable an auxiliary driving system to employ more optimized data, thereby facilitating its decision-making and control, for example, making, based on the optimized data, a better decision for auxiliary driving functions or scenarios, such as adaptive cruise and emergency braking, with such functions or scenarios further including vehicle stability control and the like.

Although implementations of the method and apparatus for synchronizing multi-sensor target information fusion with multi-sensor sensing have been mainly described in the invention, the invention is not limited to these implementations, and the invention may be implemented in a way of: an auxiliary driving method comprising the method described above or an auxiliary driving system comprising the apparatus described above, or a computer device for performing the method described above or a computer program for performing the method described above, or a computer program for implementing functions of the apparatus described above or a computer-readable recording medium having the computer program recorded thereon.

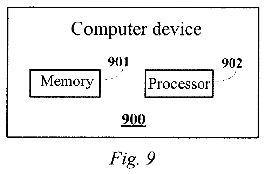

Fig. 9 shows a computer device according to one implementation of the invention that is configured to perform a method for synchronizing multi-sensor target information fusion with multi-sensor sensing according to one implementation of the invention. As shown in Fig. 9, a computer device 900 comprises a memory 901 and a processor 902. Although not shown, the computer device 900 further comprises a computer program that is stored on the memory 901 and operable on the processor 902. The program implements, when executed by the processor, the steps, for example as shown in Figs. 6 and 7, of a method for synchronizing multi-sensor target information fusion with multi-sensor sensing according to one implementation of the invention.

Compared with the prior art, the method P100 or the apparatus 800 according to one implementation of the invention can obtain one or more of the beneficial effects as follows:

(1) it can be ensured that a sufficiently accurate fusion result can be obtained even if sensing results of sensors are not updated or have a relatively long update cycle; and
(2) in addition to a scenario in which the sensing results of the sensors are not updated or have a relatively long update cycle, it can also be ensured that a sufficiently accurate fusion result can be obtained even if sensors have different cycles for updating sensing results thereof.

In addition, as described above, the invention may also be implemented as a recording medium, which stores a program for enabling a computer to perform an optimization method for multi-sensor target information fusion according to one implementation of the invention.

The invention may also be implemented as a recording medium, which stores a program for enabling a computer to perform a method for synchronizing multi-sensor target information fusion with multi-sensor sensing according to another implementation of the invention.

Here, various types of recording media, such as disks (e.g., a magnetic disk, an optical disk, etc.), cards (e.g., a memory card, an optical card, etc.), semiconductor memories (e.g., a ROM, a non-volatile memory, etc.), and tapes (e.g., a magnetic tape, a cassette tape, etc.), can be used as the recording medium.

By recording, in these recording media, a computer program that enables a computer to perform the optimization method for multi-sensor target information fusion in the implementations above or a computer program that enables a computer to implement functions of the optimization apparatus for multi-sensor target information fusion in the implementations above and circulating the computer program, costs are reduced, and portability and versatility are improved.

Furthermore, the recording medium is loaded on a computer, the computer reads the computer program recorded in the recording medium and stores same in a memory, and a processor (central processing unit (CPU) and a micro processing unit (MPU)) provided on the computer reads out and executes the computer program from the memory, whereby the optimization method for multi-sensor target information fusion in the implementations above can be performed, and functions of the optimization apparatus for multi-sensor target information fusion in the implementations above can be implemented.

**Claims**

1. An optimization method for multi-sensor target information fusion, comprising:

step S1: obtaining, for each current time, a fusion prediction result for all sensors concerning a target state at the current time, wherein, the target state represents a motion state of a target around a vehicle, the fusion prediction result at the current time is obtained with an optimal fusion estimation result concerning the target state at the previous time;
step S2: obtaining actual measurement results from each sensor concerning the target state at the current time;
step S3: obtaining, for each set of actual measurement results, an optimal estimation result for each corresponding sensor concerning the target state at the current time based on the fusion prediction result and the set of actual measurement results, wherein the step S3 comprises:

step S31: calculating, for each set of actual measurement results, a corresponding transformation matrix based on the fusion prediction result and the set of actual measurement results;
step S32: calculating a corresponding covariance of each set of actual measurement results;
step S33: calculating, for each set of actual measurement results, a corresponding Kalman gain based on the corresponding transformation matrix and the corresponding covariance; and
step S34: calculating, for each set of actual measurement results, the corresponding optimal estimation result for the corresponding sensor concerning the target state at the current time based on the fusion prediction result, the corresponding Kalman gain, the set of actual measurement results, and the corresponding transformation matrix; and

step S4: determining a corresponding weight of each of the optimal estimation results according to a corresponding covariance of each set of actual measurement results, and performing a weighted operation on the optimal estimation results using the corresponding weight to obtain an optimal fusion estimation result concerning the target state at the current time.

2. The optimization method according to claim 1, **characterized by** further comprising:
step S5: correcting the covariance obtained in step S32 according to the transformation matrix obtained in step S31 and the Kalman gain obtained in step S33, so as to obtain a corrected covariance.

3. The optimization method according to claim 2, **characterized in that** in step S32, the corresponding covariance of each set of actual measurement results at the current time is obtained with a corrected covariance obtained at a previous time.

4. A method for synchronizing multi-sensor target information fusion with multi-sensor sensing, **characterized by** comprising the steps in the order of:

step P1: obtaining actual measurement results from each sensor concerning a target state and recording a time at which each set of actual measurement results is obtained, so as to record a first time stamp for each set of actual measurement results;
step P2: recording, as a second time stamp, a time at which target information fusion processing starts to be performed;
step P3: calculating a time difference between each first time represented by each first time stamp and a second time represented by the second time stamp respectively;
step P4: updating corresponding actual measurement results obtained at the first time based on each calculated time difference to obtain corresponding estimated measurement results at the second time;
step P5: obtaining a fusion prediction result for all sensors concerning the target state at the second time; and
step P6: obtaining, for each set of estimated measurement results, an optimal estimation result for each corresponding sensor concerning the target state at the second time based on the fusion prediction result and the set of estimated measurement results, wherein the step P6 comprises:

step P61: calculating, for each set of estimated measurement results, a corresponding transformation matrix based on the fusion prediction result and the set of estimated measurement results;

step P62: calculating a corresponding covariance of each set of estimated measurement results;

step P63: calculating, for each set of estimated measurement results, a corresponding Kalman gain based on the corresponding transformation matrix and the corresponding covariance; and

step P64: calculating, for each set of estimated measurement results, the corresponding optimal estimation result for the corresponding sensor concerning the target state at the second time based on the fusion prediction result, the corresponding Kalman gain, the set of estimated measurement results, and the corresponding transformation matrix.

5. The method according to claim 4, **characterized by** further comprising:
step P7: fusing optimal estimation results for all the sensors to determine a corresponding weight of each of the optimal estimation results and thus to obtain an optimal fusion estimation result concerning the target state at the second time.

6. The method according to claim 4, **characterized by** further comprising:
step P8: correcting the covariance obtained in step P62 according to the transformation matrix obtained in step P61 and the Kalman gain obtained in step P63, so as to obtain a corrected covariance.

7. The method according to claim 6, **characterized in that** in step P62, the corresponding covariance of each set of estimated measurement results at the second time is obtained with a corrected covariance at the first time.

8. The method according to claim 5, **characterized in that** in step P1, the fusion prediction result at the second time is obtained with an optimal fusion estimation result concerning the target state at the first time.

9. A computer device, comprising a memory, a processor, and a computer program stored on the memory and operable on the processor, **characterized in that** the program implements, when executed by the processor, the steps of the method according to any of claims 1 to 8.

10. A recording medium having a computer program stored thereon, **characterized in that** the program can be executed by a computer to implement the steps of the method according to any of claims 1 to 8.

11. An auxiliary driving method, **characterized by** comprising:
an optimization method for multi-sensor target information fusion according to any of claims 1 to 3; and/or
a method for synchronizing multi-sensor target information fusion with multi-sensor sensing according to any of claims 4 to 8.

**Patentansprüche**

1. Optimierungsverfahren zur Fusion von Zielinformationen mehrerer Sensoren, umfassend:

Schritt S1: Erhalten, für jeden aktuellen Zeitpunkt, eines Fusionsvorhersageergebnisses für alle Sensoren bezüglich eines Zielzustands zum aktuellen Zeitpunkt, wobei der Zielzustand einen Bewegungszustand eines Ziels um ein Fahrzeug herum darstellt, und wobei das Fusionsvorhersageergebnis zum aktuellen Zeitpunkt unter Verwendung eines optimalen Fusionsschätzergebnisses bezüglich des Zielzustands zum vorherigen Zeitpunkt erhalten wird;
Schritt S2: Erhalten tatsächlicher Messergebnisse von jedem Sensor bezüglich des Zielzustands zum aktuellen Zeitpunkt;
Schritt S3: Erhalten, für jede Gruppe tatsächlicher Messergebnisse, eines optimalen Schätzergebnisses für jeden entsprechenden Sensor bezüglich des Zielzustands zum aktuellen Zeitpunkt basierend auf dem Fusionsvorhersageergebnis und der Gruppe tatsächlicher Messergebnisse, wobei Schritt S3 umfasst:

Schritt S31: Berechnen, für jede Gruppe tatsächlicher Messergebnisse, einer entsprechenden Transformationsmatrix basierend auf dem Fusionsvorhersageergebnis und der Gruppe tatsächlicher Messergebnisse;
Schritt S32: Berechnen einer entsprechenden Kovarianz jeder Gruppe tatsächlicher Messergebnisse;
Schritt S33: Berechnen, für jede Gruppe tatsächlicher Messergebnisse, eines entsprechenden Kalman-Verstärkungsfaktors basierend auf der entsprechenden Transformationsmatrix und der entsprechenden Kovarianz; und
Schritt S34: Berechnen, für jede Gruppe tatsächlicher Messergebnisse, des entsprechenden optimalen Schätzergebnisses für den entsprechenden Sensor bezüglich des Zielzustands zum aktuellen Zeitpunkt basierend auf dem Fusionsvorhersageergebnis, dem entsprechenden Kalman-Verstärkungsfaktor, der Gruppe tatsächlicher Messergebnisse und der entsprechenden Transformationsmatrix; und

Schritt S4: Bestimmen eines entsprechenden Gewichts jedes der optimalen Schätzergebnisse gemäß einer entsprechenden Kovarianz jeder Gruppe tatsächlicher Messergebnisse und Durchführen einer gewichteten Operation auf den optimalen Schätzergebnissen unter Verwendung des entsprechenden Gewichts, um ein optimales Fusionsschätzergebnis bezüglich des Zielzustands zum aktuellen Zeitpunkt zu erhalten.

2. Optimierungsverfahren nach Anspruch 1, **dadurch gekennzeichnet, dass** es ferner Folgendes umfasst:
Schritt S5: Korrigieren der in Schritt S32 erhaltenen Kovarianz gemäß der in Schritt S31 erhaltenen Transformationsmatrix und des in Schritt S33 erhaltenen Kalman-Verstärkungsfaktors, um eine korrigierte Kovarianz zu erhalten.

3. Optimierungsverfahren nach Anspruch 2, **dadurch gekennzeichnet, dass** in Schritt S32 die entsprechende Kovarianz jeder Gruppe von tatsächlichen Messergebnissen zum aktuellen Zeitpunkt mit einer korrigierten Kovarianz erhalten wird, die zu einem vorherigen Zeitpunkt erhalten wurde.

4. Verfahren zur Synchronisation der Fusion von Zielinformationen mehrerer Sensoren mit einer Multisensor-Erfassung, **dadurch gekennzeichnet, dass** es die folgenden Schritte in der Reihenfolge umfasst:

Schritt P1: Erhalten tatsächlicher Messergebnisse von jedem Sensor bezüglich eines Zielzustands und Aufzeichnen eines Zeitpunkts, zu dem jede Gruppe tatsächlicher Messergebnisse erhalten wird, um für jede Gruppe tatsächlicher Messergebnisse einen ersten Zeitstempel aufzuzeichnen;
Schritt P2: Aufzeichnen, als zweiter Zeitstempel, eines Zeitpunkts, zu dem die Verarbeitung der Fusion von Zielinformationen zu beginnen ausgeführt wird;
Schritt P3: Berechnen einer Zeitdifferenz zwischen jedem ersten Zeitpunkt, dargestellt durch jeden ersten Zeitstempel, und einem zweiten Zeitpunkt, dargestellt durch den zweiten Zeitstempel;
Schritt P4: Aktualisieren entsprechender tatsächlicher Messergebnisse, die zum ersten Zeitpunkt erhalten wurden, basierend auf jeder berechneten Zeitdifferenz, um entsprechende geschätzte Messergebnisse zum zweiten Zeitpunkt zu erhalten;
Schritt P5: Erhalten eines Fusionsvorhersageergebnisses für alle Sensoren bezüglich des Zielzustands zum zweiten Zeitpunkt; und
Schritt P6: Erhalten, für jede Gruppe geschätzter Messergebnisse, eines optimalen Schätzergebnisses für jeden entsprechenden Sensor bezüglich des Zielzustands zum zweiten Zeitpunkt basierend auf dem Fusionsvorhersageergebnis und der Gruppe geschätzter Messergebnisse, wobei Schritt P6 umfasst:

Schritt P61: Berechnen, für jede Gruppe geschätzter Messergebnisse, einer entsprechenden Transformationsmatrix basierend auf dem Fusionsvorhersageergebnis und der Gruppe geschätzter Messergebnisse;
Schritt P62: Berechnen einer entsprechenden Kovarianz jeder Gruppe geschätzter Messergebnisse;
Schritt P63: Berechnen, für jede Gruppe geschätzter Messergebnisse, eines entsprechenden Kalman-Verstärkungsfaktors basierend auf der entsprechenden Transformationsmatrix und der entsprechenden Kovarianz; und
Schritt P64: Berechnen, für jede Gruppe geschätzter Messergebnisse, des entsprechenden optimalen Schätzergebnisses für den entsprechenden Sensor bezüglich des Zielzustands zum zweiten Zeitpunkt basierend auf dem Fusionsvorhersageergebnis, dem entsprechenden Kalman-Verstärkungsfaktor, der Gruppe geschätzter Messergebnisse und der entsprechenden Transformationsmatrix.

5. Verfahren nach Anspruch 4, **dadurch gekennzeichnet, dass** es ferner Folgendes umfasst:
Schritt P7: Verschmelzen optimaler Schätzergebnisse für alle Sensoren, um ein entsprechendes Gewicht jedes der optimalen Schätzergebnisse zu bestimmen und somit ein optimales Fusionsschätzergebnis bezüglich des Zielzustands zum zweiten Zeitpunkt zu erhalten.

6. Verfahren nach Anspruch 4, **dadurch gekennzeichnet, dass** es ferner Folgendes umfasst:
Schritt P8: Korrigieren der in Schritt P62 erhaltenen Kovarianz gemäß der in Schritt P61 erhaltenen Transformationsmatrix und des in Schritt P63 erhaltenen Kalman-Verstärkungsfaktors, um eine korrigierte Kovarianz zu erhalten.

7. Verfahren nach Anspruch 6, **dadurch gekennzeichnet, dass** in Schritt P62 die entsprechende Kovarianz jeder Gruppe von geschätzten Messergebnissen zum zweiten Zeitpunkt mit einer korrigierten Kovarianz zum ersten Zeitpunkt erhalten wird.

8. Verfahren nach Anspruch 5, **dadurch gekennzeichnet, dass** in Schritt P1 das Fusionsvorhersageergebnis zum zweiten Zeitpunkt mit einem optimalen Fusionsschätzergebnis bezüglich des Zielzustands zum ersten Zeitpunkt erhalten wird.

9. Computervorrichtung, umfassend einen Speicher, einen Prozessor und ein Computerprogramm, die in dem Speicher gespeichert sind und auf dem Prozessor betreibbar sind, **dadurch gekennzeichnet, dass** das Programm, wenn es durch den Prozessor ausgeführt wird, die Schritte des Verfahrens nach einem der Ansprüche 1 bis 8 implementiert.

10. Aufzeichnungsmedium mit einem darauf gespeicherten Computerprogramm, **dadurch gekennzeichnet, dass** das Programm durch einen Computer ausgeführt werden kann, um die Schritte des Verfahrens nach einem der Ansprüche 1 bis 8 zu implementieren.

11. Fahrerassistenzverfahren, **dadurch gekennzeichnet, dass** es umfasst:

ein Optimierungsverfahren zur Fusion von Zielinformationen mehrerer Sensoren nach einem der Ansprüche 1 bis 3; und/oder
ein Verfahren zur Synchronisation der Fusion von Zielinformationen mehrerer Sensoren mit einer Multisensor-Erfassung nach einem der Ansprüche 4 bis 8.

## Revendications

1. Procédé d'optimisation pour une fusion d'informations cibles multi-capteurs, comprenant :

étape S1 : l'obtention, à chaque instant courant, d'un résultat de prédiction de fusion pour tous capteurs concernant un état cible à l'instant courant, l'état cible représentant un état de mouvement d'une cible autour d'un véhicule, le résultat de prédiction de fusion à l'instant courant étant obtenu avec un résultat d'estimation de fusion optimal concernant l'état cible à l'instant précédent ;
étape S2 : l'obtention de résultats de mesure réels en provenance de chaque capteur concernant l'état cible à l'instant courant ;
étape S3 : l'obtention, pour chaque ensemble de résultats de mesure réels, d'un résultat d'estimation optimal pour chaque capteur correspondant concernant l'état cible à l'instant courant sur la base du résultat de prédiction de fusion et de l'ensemble de résultats de mesure réels, l'étape S3 comprenant :

étape S31 : le calcul, pour chaque ensemble de résultats de mesure réels, d'une matrice de transformation correspondante sur la base du résultat de prédiction de fusion et de l'ensemble de résultats de mesure réels ;
étape S32 : le calcul d'une covariance correspondante de chaque ensemble de résultats de mesure réels ;
étape S33 : le calcul, pour chaque ensemble de résultats de mesure réels, d'un gain de Kalman correspondant sur la base de la matrice de transformation correspondante et de la covariance correspondante ; et
étape S34 : le calcul, pour chaque ensemble de résultats de mesure réels, du résultat d'estimation optimal correspondant pour le capteur correspondant concernant l'état cible à l'instant courant sur la base du résultat de prédiction de fusion, du gain de Kalman correspondant, de l'ensemble des résultats de mesure réels et de la matrice de transformation correspondante ; et

étape S4 : la détermination d'un poids correspondant de chacun des résultats d'estimation optimaux en fonction d'une covariance correspondante de chaque ensemble de résultats de mesure réels, et la réalisation d'une opération pondérée sur les résultats d'estimation optimaux en utilisant le poids correspondant pour obtenir un résultat d'estimation de fusion optimal concernant l'état cible à l'instant courant.

2. Procédé d'optimisation selon la revendication 1, **caractérisé en ce qu'**il comprend en outre :
étape S5 : la correction de la covariance obtenue à l'étape S32 selon la matrice de transformation obtenue à l'étape S31 et le gain de Kalman obtenu à l'étape S33, de manière à obtenir une covariance corrigée.

3. Procédé d'optimisation selon la revendication 2, **caractérisé en ce qu'**à l'étape S32, la covariance correspondante de chaque ensemble de résultats de mesure réels à l'instant courant est obtenue avec une covariance corrigée obtenue à un instant précédent.

4. Procédé de synchronisation de fusion d'informations cibles multi-capteurs avec détection multi-capteurs, **caractérisé en ce qu'**il comprend les étapes dans l'ordre suivant :

étape P1 : obtention de résultats de mesure réels en provenance de chaque capteur concernant un état cible et enregistrement d'un instant d'obtention de chaque ensemble de résultats de mesure réels, de sorte à enregistrer une première estampille temporelle pour chaque ensemble de résultats de mesure réels ;
étape P2 : enregistrement, comme deuxième estampille temporelle, d'un instant auquel un traitement de fusion d'informations cibles commence à être réalisé ;
étape P3 : calcul d'une différence temporelle entre chaque premier instant représenté par chaque première estampille temporelle et un deuxième instant représenté par la deuxième estampille temporelle respectivement ;
étape P4 : mise à jour de résultats de mesure réels correspondants obtenus au premier instant sur la base de chaque différence temporelle calculée pour obtenir des résultats de mesure estimés correspondants au deuxième instant ;
étape P5 : obtention d'un résultat de prédiction de fusion pour tous les capteurs concernant l'état cible au deuxième instant ; et
étape P6 : obtention, pour chaque ensemble de résultats de mesure estimés, d'un résultat d'estimation optimal pour chaque capteur correspondant concernant l'état cible au deuxième instant, sur la base du résultat de prédiction de fusion et de l'ensemble de résultats de mesure estimés, l'étape P6 comprenant :

étape P61 : le calcul, pour chaque ensemble de résultats de mesure estimés, d'une matrice de transformation correspondante sur la base du résultat de prédiction de fusion et de l'ensemble de résultats de mesure estimés ;
étape P62 : le calcul d'une covariance correspondante de chaque ensemble de résultats de mesure estimés ;
étape P63 : le calcul, pour chaque ensemble de résultats de mesure estimés, d'un gain de Kalman correspondant sur la base de la matrice de transformation correspondante et de la covariance correspondante ; et
étape P64 : le calcul, pour chaque ensemble de résultats de mesure estimés, du résultat d'estimation optimal correspondant pour le capteur correspondant concernant l'état cible au deuxième instant sur la base du résultat de prédiction de fusion, du gain de Kalman correspondant, de l'ensemble de résultats de mesure estimés et de la matrice de transformation correspondante.

5. Procédé selon la revendication 4, **caractérisé en ce qu'**il comprend en outre :
étape P7 : la fusion de résultats d'estimation optimaux pour tous les capteurs pour déterminer un poids correspondant de chacun des résultats d'estimation optimaux et ainsi obtenir un résultat d'estimation de fusion optimal concernant l'état cible au second instant.

6. Procédé selon la revendication 4, **caractérisé en ce qu'**il comprend en outre :
étape P8 : la correction de la covariance obtenue à l'étape P62 selon la matrice de transformation obtenue à l'étape P61 et le gain de Kalman obtenu à l'étape P63, de manière à obtenir une covariance corrigée.

7. Procédé selon la revendication 6, **caractérisé en ce qu'**à l'étape P62, la covariance correspondante de chaque ensemble de résultats de mesure estimés au deuxième instant est obtenue avec une covariance corrigée au premier instant.

8. Procédé selon la revendication 5, **caractérisé en ce qu'**à l'étape P1, le résultat de prédiction de fusion au second instant est obtenu avec un résultat d'estimation de fusion optimal concernant l'état cible au premier instant.

9. Dispositif informatique, comprenant une mémoire, un processeur et un programme informatique stocké dans la mémoire et pouvant fonctionner sur le processeur, **caractérisé en ce que** le programme met en œuvre, lorsqu'il est exécuté par le processeur, les étapes du procédé selon l'une quelconque des revendications 1 à 8.

10. Support d'enregistrement sur lequel est stocké un programme informatique, **caractérisé en ce que** le programme peut être exécuté par un ordinateur pour mettre en œuvre les étapes du procédé selon l'une quelconque des revendications 1 à 8.

11. Procédé de pilotage auxiliaire **caractérisé en ce qu'**il comprend :

un procédé d'optimisation pour une fusion d'informations cibles multi-capteurs selon l'une quelconque des revendications 1 à 3 ; et/ou
un procédé de synchronisation de fusion d'informations cibles à capteurs multiples avec détection multi-capteurs selon l'une quelconque des revendications 4 à 8.

Obtaining a fusion
prediction result — S1

Obtaining actual
measurement results — S2

Obtaining an optimal
estimation result — S3

Determining a weight,
and obtaining an optimal
fusion estimation result — S4

**S100**

*Fig. 1*

Calculating a
transformation matrix — S31

Calculating a
covariance — S32

Calculating a
Kalman gain — S33

Calculating an optimal
estimation result — S34

**S3**

*Fig. 2*

```
┌─────────────────────────┐  S41
│ Determining a corresponding │ ↗
│   weight of an optimal      │
│    estimation result        │
└─────────────────────────┘
              │
              ▼
┌─────────────────────────┐  S42
│   Obtaining an optimal fusion │ ↗
│ estimation result for all sensors │
└─────────────────────────┘
```

**S4**

*Fig. 3*

```
┌─────────────────────────────┐
│  ┌─────────────────┐  101    │
│  │     Unit 1       │ ⌐      │
│  └─────────────────┘         │
│  ┌─────────────────┐  102    │
│  │     Unit 2       │ ⌐      │
│  └─────────────────┘         │
│  ┌─────────────────┐  103    │
│  │     Unit 3       │ ⌐      │
│  └─────────────────┘         │
│  ┌─────────────────┐  104    │
│  │     Unit 4       │ ⌐      │
│  └─────────────────┘         │
│           100                │
└─────────────────────────────┘
```

*Fig. 4*

```
┌──────────────────────────────────┐
│         Computer device           │
│      201              202         │
│  ┌────────┐      ┌──────────┐     │
│  │ Memory │      │ Processor │     │
│  └────────┘      └──────────┘     │
│              200                  │
└──────────────────────────────────┘
```

*Fig. 5*

Obtaining each set of actual
measurement results and
recording each first time stamp

P1

Recording a second time
stamp

P2

Calculating a time
difference

P3

Updating the actual
measurement results to obtain
estimated measurement results

P4

Obtaining a fusion
prediction result

P5

Obtaining an optimal
estimation result

P6

**P100**

*Fig. 6*

| Calculating a transformation matrix | P61 |

| Calculating a covariance | P62 |

| Calculating a Kalman gain | P63 |

| Calculating an optimal estimation result | P64 |

**P6**

*Fig. 7*

| Unit 6 | 801 |
| Unit 7 | 802 |
| Unit 8 | 803 |
| Unit 9 | 804 |
| Unit 10 | 805 |
| Unit 11 | 806 |

**800**

*Fig. 8*

Computer device

901

902

Memory

Processor

**900**

*Fig. 9*

**EP 3 726 429 B1**

**Patent documents cited in the description**

- CN 105352535 A